Europäisches Patentamt

European Patent Office

Office européen des brevets

(19)

(11) Publication number: **0 067 975**
**B1**

(12) **EUROPEAN PATENT SPECIFICATION**

(45) Date of publication of patent specification: **19.08.87**

(21) Application number: **82104652.1**

(22) Date of filing: **27.05.82**

(51) Int. Cl.⁴: **C 25 B 1/10, C 25 B 11/04,
C 25 B 11/06, C 25 B 11/08**

(54) **Method for water electrolysis.**

(30) Priority: **01.06.81 JP 82541/81
01.06.81 JP 82542/81
02.06.81 JP 83829/81**

(43) Date of publication of application:
**29.12.82 Bulletin 82/52**

(45) Publication of the grant of the patent:
**19.08.87 Bulletin 87/34**

(84) Designated Contracting States:
**DE FR GB**

(56) References cited:
**EP-A-0 029 751
CH-A- 161 836
DE-A-1 816 820
DE-A-2 829 901
DE-C- 625 174
FR-A-2 418 027
JOURNAL OF ELECTROCHEMICAL SOCIETY,
vol.128, no.4, April 1981, Manchester, New
Hampshire (US), D.E. HALL: "Electrodes for
alkaline water electrolysis", pages 740-746**

**CHEM.-ING.-TECH., vol.52, no.5, 1980, Verlag
Chemie GmbH, Weinheim (DE), P. BRENNECKE
et al.: "Der Einsatz von hochporösen Nickel-
Elektroden in alkalischen Wasserelektrolyse-
Zellen", pages 426-428**

(73) Proprietor: **ASAHI GLASS COMPANY LTD.
No. 1-2, Marunouchi 2-chome
Chiyoda-ku, Tokyo (JP)**

(72) Inventor: **Oda, Yoshio
No. 435, Kamisugeta-cho Hodogaya-ku
Yokohama-shi Kanagawa-ken (JP)**
Inventor: **Otouma, Hiroshi
No. 229, Arai-cho Hodogaya-ku
Yokohama-shi Kanagawa-ken (JP)**
Inventor: **Endoh, Eiji
188-17, Sasanodai Asahi-ku
Yokohama-shi Kanagawa-ken (JP)**

(74) Representative: **Wächtershäuser, Günter, Dr.
Tal 29
D-8000 München 2 (DE)**

(56) References cited:
**A. SCHMIDT: "Angewandte Elektrochemie:
"Grundlagen der elektrolytischen
Produktionsverfahren", 1976, Verlag Chemie,
Weinheim, New York, pages 74,75,123,125
Ullmanns Encyklopädie der technischen
Chemie, vol. 18, 1967, 524, Urban-
Schwarzenberg-München-Berlin-Wien**

# Description

The present invention relates to a method for electrolyzing water in an electrolytic cell provided with an anode and a cathode and cation exchange membrane disposed therebetween, whereby the anode comprises an electrode substrate having a metal layer which is composed of at least one metal selected from nickel, cobalt and silver and which contains partially exposed particles composed essentially of at least one metal selected from nickel, cobalt and silver. Such a method is known from FR—A—24 18 027. However, the oxygen overvoltage is in need for further improvement.

On the other hand, an anode having a coating of a noble metal such as platinum, palladium or ruthenium, or an alloy or oxide thereof has been used in the conventional electrolysis of sodium chloride, but is not practically useful as an anode for the electrolysis of water because of the following problems.

Namely, ruthenium and palladium tend to be gradually dissolved by the effect of the alkaline solution and thus they are inferior in the durability.

Summary of the invention

It is the object of the present invention to provide a method whereby water can be electrolyzed at a low voltage with a low oxygen overvoltage and a superior durability.

The present invention solves this problem by a method in accordance with the main claim.

The cathode used in the present invention is not critical and a cathode commonly used in the conventional electrolysis of sodium chloride, for instance a cathode obtained by subjecting iron, stainless steel, etc. to etching treatment, may be used as the cathode in the present invention. It is also possible to use as the cathode, the anode useful for the present invention.

As the cation exchange membrane, a known fluorine-containing cation exchange membrane may be used. In view of the durability and the low cell voltage for electrolysis, a perfluoro fluorinated carbon membrane having carboxylic acid groups as the ion exchange groups (for instance, the ones disclosed in Japanese Laid-Open Patent Applications No. 140899/76 and No. 48598/77) is particularly preferred.

Now, the anode to be used in the present invention will be described. The anode to be used in the present invention must have a layer composed of at least one metal selected from nickel, cobalt and silver formed on an electrode substrate and which layer contains particles composed essentially of at least one metal selected from nickel, cobalt and silver, the particles being partially exposed on the surface of the layer. On the surface of the electrode, numerous particles are bonded, and macroscopically the electrode surface presents a fine porous structure.

Thus, the anode has numerous particles composed essentially of nickel, cobalt or silver on the electrode surface and the electrode surface has a fine porous structure as mentioned above. Accordingly, the anode has a large electrochemically active surface area. By virtue of the synergetic effect, it is thereby possible to effectively reduce the oxygen overvoltage. The particles are firmly fixed to the electrode surface by the layer composed of a metal and highly resistant against degradation, whereby it is possible to remarkably prolong the period for maintaining the low oxygen overvoltage.

Further, by virtue of the above-mentioned effect, the electrode performance at the initial stage can also be improved.

The electrode substrate can be made of a suitable electric conductive metal such as Ti, Zr, Fe, Ni, V, Mo, Cu, Ag, Mn, platinum group metals, graphite and Cr and alloys thereof. Preferred among them are Fe and Fe-alloys (a Fe-Ni alloy, a Fe-Cr alloy and a Fe-Ni-Cr alloy), Ni and Ni-alloys (a Ni-Cu alloy and a Ni-Cr alloy), Cu and Cu-alloys. Particularly preferred materials for the electrode substrate are Fe, Cu, Ni, Fe-Ni alloys and Fe-Ni-Cr-alloys.

The structure of the electrode substrate may be adapted to have an optional size and dimensions suitable for the structure of the particular electrode to be used. The shape may be a plate, foraminous net (such as an expanded metal) or parallel screen shape which may be flat, curved or cylindrical.

The particles composed essentially of a metal selected from nickel, cobalt and silver and serving an electrochemically active anode particles, may be made of such a metal itself or a metal composition or alloy having said metal as the main component, or they may be composite particles having a surface layer composed of such a metal or alloy.

When the metal composition or alloy having said metal as the main component is used, a metal which does not substantially adversely affect the reduction of the oxygen overvoltage such as Al, Zn, Mg, Sn, Si or Sb may be used as the additional component, depending upon the content of the additional component.

The average particle size of the particles is usually in a range of from 0.1 to 100 µm though it depends upon the dispersibility of the particles. From the viewpoint of the porosity of the surface of the electrode, the average particle size is preferably in a range of from 0.9 to 50 µ especially from 1 to 30 µm.

The particles are preferably porous on their surfaces so as to give a lower oxygen overvoltage.

The term "porous on their surfaces" means that the surfaces of the particles exposed on the metal layer are porous and does not necessarily mean that the entire surfaces of the particles are porous.

In general, the greater the porosity, the better. However, an excessive porosity leads to a decrease of the mechanical strength of the particles. Accordingly, the porosity is preferably within a range of from 20 to 90%. Within this range, a more preferable range is from 35 to 85%, especially from 50 to 80%.

The porosity is measured by the conventional water substituting method.

Various methods may be employed for forming the porous surface such as a method of removing metals other than Ni, Co and Ag from an alloy having Ni, Co or Ag as the main component to form the porous surface; a method of converting Ni, Co or Ag into carbonyl compound thereof and decomposing thermally the carbonyl compound to form the porous surface; a method of decomposing thermally an organic acid salt of Ni, Co or Ag to form the porous surface; and a method of heating an oxide of Ni, Co or Ag in hydrogen reducing atmosphere to form the porous surface.

From the viewpoint of a processability, it is preferable to employ the method of removing metals other than Ni, Co and Ag from an alloy having Ni, Co or Ag as the main component. In such method, the particles are made of an alloy comprising a first metal component selected from the group consisting of Ni, Co and Ag and a second metal component selected from the group consisting of Al, Zn, Mg, Si, Sb and Sn and at least a part of the second metal component is removed from the alloy by treatment with an alkali metal hydroxide.

Examples of such alloys include Ni-Al alloys, Ni-Zn alloys, Ni-Mg alloys, Ni-Sn alloys, Ni-Si alloys, Co-Al alloys, Co-Zn alloys, Co-Mg alloys, Co-Si alloys, Co-Sn alloys, Ag-Al alloys, Ag-Zn alloys, Ag-Mg alloys, Ag-Sn alloys, and Ag-Si alloys.

From the viewpoint of easy availability, it is preferable to use Ni-Al alloys, Co-Al alloys or Ag-Al alloys. Specifically, such preferred alloys are unleached Raney nickel, Raney cobalt or Raney silver. Among them, especially preferred is the Ni-Al alloy, specifically unleached Raney nickel.

The metals of the metal layer for bonding the particles are metals having high alkaline resistance and being capable of firmly bonding the particles and preferably selected from the group consisting of Ni, Co and Ag, especially the same metal as the metal of the essential component of the particles.

The thickness of the metal layer according to the present invention may vary depending upon the particle size of the particles employed, but it is usually within a range of from 20 to 200 μm preferably from 25 to 150 μm especially from 30 to 100 μm since the particles are bonded to the metal layer on the electrode substrate so that they are partially embedded in the metal layer.

The proportion of the particles in the metal layer is preferably from 5 to 80 wt.%. more preferably from 10 to 50 wt.%.

It is also preferable to form an intermediate layer made of a metal selected from the group consisting of Ni, Co, Ag and Cu between the electrode substrate and the metal layer containing the particles whereby the durability of the electrode can further be improved.

Such an intermediate layer can be made of the same or different metal as the metal layer and is preferably made of the same metal from the viewpoint of the bonding strength to the metal layer.

A thickness of the intermediate layer is usually within a range of from 5 to 100 μm preferably from 20 to 80 μm especially from 30 to 50 μm.

When the surface of the electrode is observed microscopically, many particles are exposed on the electrode surface, but when observed macroscopically, the surface layer is porous.

The degree of the porosity relates to the reduction of oxygen overvoltage and a satisfactory result is obtainable when an electrical double layer capacity (a value of a double-layer capacity), is more than 1000 μF/cm². Within the above range, said electrical double layer capacity is preferably more than 2000 μF/cm² especially more than 5000 μF/cm².

The electrical double layer capacity is an electrostatic capacity of electric double layers formed by positive and negative ions relatively distributed with a short distance from each other near the surface of the electrode when the electrode is immersed in an electrolytic solution and it is measured as a differential capacity.

The capacity increases with an increase of the surface area of the electrode. Thus, the electrical double layer capacity of the surface of the electrode increases with an increase of the porosity of the surface as the surface area of the electrode is thereby increased. The electrochemically effective surface area of the electrode, i.e. the porosity of the surface of the electrode, can be evaluated by the electrical double layer capacity.

The electrical double layer capacity varies depending upon the temperature at the time of the measurement and the kind and concentration of the electrolyte solution, and on the potential and the electrical double layer capacity in the specification means values measured by the following method.

A test piece (electrode) was immersed in an aqueous solution of 35 wt.% of NaOH at 25°C and a platinum electrode having platinum black coat (platinized platinum plate) having a specific area of about 100 times of the area of the test piece was immersed forming a pair of electrodes and a cell-impedance in the condition is measured by an impedance meter to obtain an electrical double layer capacity.

Various methods for coating the surface layer on the electrode, for example, a composite coating method, a melt spraying method, a sintering method, etc. can be employed.

Particularly preferred is the composite coating method.

In the composite coating method, electroplating is carried out with the electrode substrate as a cathode, in a plating bath prepared by suspending the particles composed essentially of e.g. nickel, in an aqueous solution containing a metal ion which forms a metal matrix, whereby the metal and the particles are codeposited on the electrode substrate.

When a nickel layer is formed as the metal layer, it is possible to use a plating bath such as Watts bath, a sulfamate bath. Weisberg bath, a nickel chloride bath, a nickel chloride sulfate bath, a nickel chloride-nickel acetate bath, a nickel sulfate bath, a hard nickel bath, a nickel fluoborate bath, a nickel phosphate bath and a nickel alloy bath.

When a cobalt layer is formed as the metal layer, it is possible to use a plating bath such as a cobalt chloride bath, a cobalt sulfamate bath, a cobalt ammonium sulfate bath, a cobalt sulfate bath and a cobalt soluble organic acid salt bath.

When a silver layer is formed as the metal layer, it is possible to use a silver plating bath (AgCN 36 g/l; KCN 60 g/l and $K_2CO_3$ 15 g/l).

It is preferable to use the above-mentioned baths. However, the bath is not critical and various nickel plating baths, cobalt plating baths and silver plating baths can be used.

Especially, in the case of the Ni plating bath or the Co plating bath, the pH of the bath is preferably adjusted to fall within a range of from 1.5 to 4.5. The reason is that particles containing Ni or Co usually have oxygen attached on their surfaces and when the particles are applied to the electrode substrate, the attached oxygen impairs the bonding strength of the particles to the electrode substrate, and for the removal of the attached oxygen from the surface of the particles in the electroplating bath, it is preferred that the bath has a pH of from 1.5 to 4.5.

The same effect is also effectively obtainable when Cl ions are present in the bath. In this case, the concentration of Cl-ions in the bath is preferably at least 135 g/l.

A better effect is obtainable when the pH is adjusted to fall within a range of from 1.5 to 4.5 and at the same time the concentration of Cl ions is adjusted to be at least 135 g/l.

Specific preferred embodiments for obtaining an electrodeposited composite coating will be described.

An electrode substrate is immersed in a bath containing dispersed, particles composed essentially of a metal selected from nickel, cobalt and silver, and electroplating is carried out while vibrating a vibration plate disposed in the bath and stirring the bath with a bubbler, or electroplating is carried out while circulating the plating bath between the plating tank and the reservoir tank for the plating bath at a linear velocity of the bath of from 5 to 300 cm/sec.

When the former method is employed, the frequency of the vibrations is from 5 to 500 cycles/min., preferably from 10 to 300 cycles/min., more preferably from 50 to 150 cycles/min., the amplitude of the vibrations is from 5 to 30%, preferably from 10 to 25%, more preferably from 15 to 25%, of the height of the plating tank, and the amount of the bubbling gas is from 0.1 to 100 l/min., preferably from 1 to 50 l/min., more preferably from 5 to 35 l/min., per 1 cm² of the bottom surface area of the plating tank.

In the latter method, the linear velocity of the bath is preferably from 10 to 200 cm/sec., more preferably from 15 to 120 cm/sec.

The proportion of the particles in the bath is preferably within a range of from 1 to 200 g/l so as to provide a satisfactory bonding condition for the particles to be deposited on the electrode surface. During the dispersion plating operation, the temperature is kept preferably within a range of from 20 to 80°C and the current density is maintained within a range of from 1 to 20 A/dm².

An additive to reduce the distortion, an additive to facilitate the co-deposition or the like may, of course, be added to the plating bath.

Further, in order to enhance the bonding strength of the particles to the metal layer, heating treatment or a further Ni plating subsequent to the composite coating may also optionally be carried out.

Thus, an electrode having the particles bonded thereto by the metal layer is obtainable.

A remarkable reduction of the cell voltage can be obtained with use of the above electrode. In order to further reduce the cell voltage, it is effective to further deposit a noble metal material selected from platinum, rhodium or iridium, their alloys, their oxides or oxide mixtures.

Such a noble metal or its oxide is the one capable of being readily deposited on the exposed particles and capable of being uniformly deposited on the entire electrode surface even if it is applied in a very small amount, and coupled with the electrochemical activity of the exposed particles, it is further capable of reducing the overvoltage synergistically.

The amount of the noble metal of its oxide to be deposited on the electrode having the exposed particles on its surface, may be as small as from 1 to 100 mg, preferably from 5 to 50 mg, calculated as the noble metal, per 1 cm² of the apparent surface area of the electrode. If the amount is less than 1 mg, the synergistic effect to reduce the overvoltage is not adequate. On the other hand, even if an amount greater than 100 mg is used, no further increase in the synergistic effect is obtainable.

The method for applying the noble metal or its oxide onto the electrode surface is not critical. For instance, an aqueous solution of a noble metal salt may be sprayed or coated on the electrode surface or the electrode may be dipped in such an aqueous solution to deposit the salt on the electrode, and then heating is applied to decompose the salt to form the noble metal or to form its oxide, or heating is conducted in a hydrogen gas stream to form the noble metal. Or it is also possible to carry out electroplating or electroless plating in an aqueous solution of a noble metal salt to deposit the noble metal on the electrode surface.

Further, it is possible to apply a noble metal oxide by coating a slurry of the noble metal oxide or by dipping the electrode in such a slurry.

It has been found that the noble metal or its oxide thus deposited provides an unexpected superior effect.

During the electrolysis of water, the effect to improve the durability i.e. the effective life, of the electrode, as well as the above-mentioned effect to reduce the overvoltage, is remarkable and attributable to the deposition of the noble metal or its oxide.

In the course of the extensive researches on the practical electrolysis of water, the present inventors have found that when ions containing calcium, magnesium, silicon, manganese, etc or $SiO_3^{2-}$ ions are present in the anode electrolytic solution, oxides or hydroxides tend to deposit on the anode, and various studies have been made to prevent the deposition of such oxides or hydroxides. As a result, it has been found that an electrode having a porous surface layer and provided with an electron non-conductive material finely, uniformly and discontinuously deposited on the entire surface of the electrode, can be used as an anode which is effective as a means to prevent the above-mentioned phenomenon and to facilitate the removal of the generated oxygen gas by forming the gas into large bubbles.

The electrode having a porous surface layer may be an electrode obtained by an electrodeposition of composite coating by immersing a liquid non-permeable electrode substrate made of iron etc. into a nickel plating bath in which metallic particles such as leached or non-leached Raney nickel particles are dispersed as disclosed in Japanese Laid-Open Patent Application No. 112785/1979, or an etching or a sand-blasting of a surface of an electrode substrate as disclosed in Japanese Examined Patent Publication No. 19229/1979 or Japanese Laid-Open Patent Application No. 115626/1979.

The fine, uniform and discontinuous distribution means the condition distributing uniformly the adhered electron non-conductive material in the form of separated spots, or strips connecting several to several tens of the spots on the surface of the electrode. It is usually considered that during the electrolysis the aforementioned silicon, calcium, magnesium or manganese is relatively easily deposited on the projected parts and accordingly the electron non-conductive material is preferably deposited in the form of spots or strips so as to cover the projected parts of the surface of the electrode. But, the application of the electron non-conductive material is not necessarily confined to this manner and can be made in various other manners.

Further, it is considered that the generated fine oxygen bubbles are induced to get together to form large bubbles by the effect of the adhered electron non-conductive layer.

In the present invention, it is important to use the electron non-conductive material as the material to be deposited on the surface layer of the electrode. When an electron conductive material is deposited, the electron conductive material is active as the electrode whereby the prevention of deposition of the impurities such as the above-mentioned compounds can not be attained, such being disadvantageous.

The electron non-conductive material can be various electrically insulating or ionic conductive inorganic or organic materials such as glass, porcelain enamel, ceramics and polymers. In view of the durability, it is preferred that the material is water insoluble and solid under the condition for the operation of the electrode. In view of the strong adhesion to the surface layer of the electrode and easy control of the amount of deposition, the organic polymer is preferably employed.

Suitable organic polymers which may effectively be employed in the present invention include various synthetic or natural resins or elastomers and particularly synthetic polymers such as homopolymers and copolymers of a fluorinated olefin such as tetrafluoroethylene, chlorotrifluoroethylene, vinylidene fluoride, vinyl fluoride and hexafluoropropylene, a chlorinated olefin such as vinyl chloride and vinylidene chloride; an olefin such as ethylene, propylene, butene-1, or isobutyrene; an aromatic unsaturated compound such as styrene; a diene such as butadiene, chloroprene or isoprene; a nitrile or nitrile derivative such as acrylonitrile, methacrylonitrile, methyl acrylate and methyl methacrylate; polycondensates or polyaddition polymer such as polyurethane, polyurethane urea, polyurea, polyamideimide, polyamide, polyimide, polysiloxane, polyketal and polyallylene ether; and the polymers having ionic conductivity which have ion exchange groups such as

$-COOH, -COONa, -SO_3H, -SO_3Na,$
$-CH_2N(CH_3)_3Cl, -CH_2N(CH_3)_3OH, -CH_2,$
$-CH_2N(CH_3)_3(C_2H_4OH)Cl,$
$-CH_2N(CH_3)_3(C_2H_4OH)OH, -CH_2N(CH_3)_2$ and
$-CH_2NH(CH_2)-;$

and natural macromolecular materials such as natural rubber, cellulose and polypeptide.

In the selection of the electron non-conductive materials used in the present invention, it is preferable to consider the condition in the use of the anode such as the atmosphere, the electrolyte, the kind of evolved gas, the temperature and the rate of the evoluted gas to set a desired chemical resistance, heat resistance and mechanical strength; and moreover, it is preferable to consider the adhesion to the surface layer of the electrode; and the processibility in the adhering operation.

When the anode is used for electrolysis of water, it is preferable to select a homopolymer or copolymer of a fluorinated olefin having excellent alkaline resistance and heat-resistance such as a perfluoro polymer such as polytetrafluoroethylene (PTFE), a tetrafluoroethylene-hexafluoropropylene copolymer, and a tetrafluoroethyleneperfluoro-5-oxa-6-peptenic acid ester copolymer.

The process for adhering the electron non-conductive material on the anode is not critical and various processes may be used. In view of the control of the amount of deposition, the dipping process, the spraying process or the electrophoretic process with use of a solution or dispersion of the material may be mentioned as a preferable process. In accordance with said processes, the electron non-conductive material can be finely, uniformly, discontinuously deposited on the surface of the anode. The electrode holding the electron non-conductive material together with a solvent or a dispersion medium on the porous layer is dried or baked after drying to firmly bond it to the surface of the anode. In the case of the dipping process, the electrophoretic process, or the spraying process, the solution or the dispersion is preferably thoroughly mixed to have a uniform concentration, otherwise the electron non-conductive material can not uniformly be deposited on the surface of the anode.

The amount of the electron non-conductive material is preferably in a range of from 0.3—10 cc/m$^2$ especially from 0.5—9 cc/m$^2$ based on the apparent surface area of the electrode. The amount is given by dividing the adhered weight (g) of the electron non-conductive material per m$^2$ of the apparent surface area of the electrode by the density of the material. The reason of the limitation of the amount is as follows: When the amount is less than 0.3 cc/m$^2$, the deposition of the metal or the insoluble salt from the electrolytic solution on the surface of the electrode can not be effectively prevented, whereas when it is more than 10 cc/m$^2$, the effective surface area of the electrode is reduced too much.

In order to control the electron non-conductive material in said range, the concentration or viscosity of the solution or the dispersion is controlled in a suitable range to control the pickup amount, or the dipping times are controlled in the dipping process; and the sprayed amount and spray times are controlled in the spraying process and the current density or the time for applying current is controlled to control the quantity of electricity in the electrophoretic process. According to various studies, it is preferable to bring the concentration of the solution or the dispersion in a range of from 0.1—5 wt.%, especially from 0.5—5 wt.% in the dipping process in view of the operation in the case of the dipping process. It is preferable to select the particle diameters of the electron non-conductive material within a range of from 0.05—2 μ especially from 0.1—1 μ depending upon the porosity (i.e. distribution of the projections, height or depth and width of the projections or voids) in the dispersion.

An example of the preferred method for producing an anode to be used in the present invention will be illustrated. As such an anode, (1) the one obtained by the codeposition of Raney nickel as disclosed in Japanese Laid-Open Patent Application No. 112785/1979 or (2) the one obtained by depositing a noble metal or its oxide as mentioned above, is preferably used.

The anode is dipped in a dispersion of an electron non-conductive material such as PTFE particles to apply the dispersion onto the anode and it is then dried and baked to fix the PTFE particles as the electron non-conductive material to the anode.

In the case of the above-mentioned method (1), the electrochemically active anode particles can be made of an alloy of the first metal and the second metal or a leached alloy obtained by removing at least a part of the second metal component from said alloy. However, the former is preferably used because of the following reason.

In the former process, the particles are codeposited in the form of an alloy and the electron non-conductive material is adhered on the particles and then at least part of the second metal is removed. The reason for the preferable result is not clear. But, it is considered a part of the electron non-conductive material adhered is removed together with the second metal in the leaching of the second metal whereby the electron non-conductive material adhered on the deep parts of voids of the surface layer of the anode may be removed.

The anode thus obtained can be used as the gas evolution anode in various fields, but it is especially effective as an anode for electrolysis of water.

When the electrode described in the foregoing is employed as an anode for the electrolysis of water, if desired, it is treated with an alkali metal hydroxide (for example, by immersing it in an aqueous solution of an alkali metal hydroxide) to remove at least a part of the metal component other than Ni, Co and Ag in the alloy particles, and thereby to make the particles porous.

In the treatment, the concentration of the aqueous solution of an alkali metal hydroxide as NaOH is preferably in a range of from 5 to 40 wt.% and the temperature is preferably from 20 to 150°C.

A cation exchange membrane provided on its surface with a gas and liquid permeable non-electrochemically active porous layer having a thickness thinner than the membrane as disclosed in Japanese Laid-Open Patent Application No. 75583/81 can advantageously be used. With use of a cation exchange membrane of this type, even when it is brought in contact with the electrode, the membrane per se is spaced from the electrode for a distance corresponding to the thickness of the porous layer formed on the membrane surface, whereby the above-mentioned effect can adequately be obtained. As an additional advantage, the evolved gas can readily be removed as disclosed in said Laid-Open Patent Application.

Now, the present invention will be described in further details with reference to the Examples.

Comparative Example 1

Powdery unleached Raney nickel (Ni: 50 wt.%, Al: 50 wt.%) was dispersed in an amount of 10 g/l into a nickel chloride bath (NiCl$_2$ · 6H$_2$O: 300 g/l, H$_3$BO$_3$: 38 g/l). The dispersion thus obtained and having a pH of 2.2 was supplied to an electroplating tank. The electroplating tank had a perforated plate movable up-and-down at the bottom of the tank, and a bubbler was disposed above the perforated plate, to discharge a gas such as nitrogen.

At both side parts of the tank, nickel electrodes (i.e. anodes) having the same surface area were provided, and at the central part of the tank, a plate to be electroplated (i.e. an iron expanded metal) connected to a negative power source was disposed.

Electroplating was carried out while vibrating the perforated plate at an amplitude of 20% of the height of the tank and at a frequency of 100 cycles/min. and blowing nitrogen gas out of the bubbler at a rate of 10 l/min per 1 dm² of the bottom surface area of the tank. The electroplating was conducted at a temperature of 40°C, at a current density of 3 A/dm² for one hour. The electroplated composite coating thereby obtained had a thickness of about 150 μm, and was uniform over the entire surface, and the content of the Raney nickel in the layer was 30 wt.%.

The electroplated plate thus obtained was treated in a 20% NaOH aqueous solution at 80°C for one hour.

The anode thus obtained was then disposed at the anode side of the cation exchange membrane composed of a copolymer of polytetrafluoroethylene with $CF_2=CFO(CF_2)_3COOCH_3$ and having an ion exchange capacity of 1.45 meq/g dry resin and a thickness of 210 μm, and the electrode likewise prepared in accordance with the above-mentioned manner was disposed as a cathode at the cathode side, whereby an electrolytic cell for the electrolysis of water was assembled.

Electrolysis was carried out at 90°C at a current density of 20 A/dm² by supplying a 30% KOH aqueous solution to the anode compartment and water to the cathode compartment, while maintaining the KOH concentration in the anode and cathode compartments at a level of 20%.

The oxygen overvoltage at the anode was measured with use of a Luggin capillary tube and SCE as a standard electrode, and it was found to be about 0.21 V. Whereas, the oxygen overvoltage of a flat nickel plate was 0.44 V.

During the above electrolysis of water, the cell voltage was 1.8 V, and when the electrolysis was continued for 30 days, no change was observed in the cell voltage.

Comparative Example 2

Powdery unleached Raney nickel (Ni: 50 wt.%, Al: 50 wt.%) was dispersed in an amount of 10 g/l into a nickel chloride bath ($NiCl_2 \cdot 6H_2O$: 300 g/l, $H_3BO_3$: 38 g/l). With use of the dispersion thus obtained and having a pH of 2.0, electroplating was carried out by means of a plating apparatus. The plating apparatus had a reservoir tank for the dispersion and a means for supplying the dispersion from the reservoir tank to the bottom of the plating tank by means of a pump, and at both side parts of the plating tank, nickel electrodes (i.e. anodes) were disposed, and at the center part thereof, an iron plate to be plated connected to a negative power source was disposed. The dispersion was circulated between the reservoir tank and the plating tank. The electroplating was conducted in the plating apparatus at a current density of 3 A/dm² for 30 minutes while circulating the dispersion having a pH of 2.0 and a temperature of 40°C at an ascending velocity in the plating tank being 70 cm/sec. The electroplated layer was grayish black and had a uniform thickness of about 70 μm, and the Raney nickel content in the electroplated layer was about 33 wt.%. The electroplated plate was treated in a 20% NaOH aqueous solution at 80°C for one hour.

A cation exchange membrane provided on the surface with a porous layer was prepared in the same manner as in Example 1 of Japanese Laid-Open Application No. 75583/81 except that the thickness of the membrane was 210 μm.

Electrolysis of water was carried out in the same manner as in Comparative Example 1 with use of the anode and the cation exchange membrane thus prepared. The oxygen overvoltage was 0.21 V, and the cell voltage was 1.60 V, and after continuous electrolysis for 30 days, no change was observed in the cell voltage.

Comparative Example 3

A Co coated anode was prepared with use of the same electroplating apparatus as in Comparative Example 1 and in the same manner as in Comparative Example 1 except that a cobalt bath ($CoSO_4 \cdot 7H_2O$: 330 g/l, $H_2BO_3$: 30 g/l, $CoCl_2 \cdot 6H_2O$: 30 g/l, 35°C, pH 4.5) was used as the electroplating bath, Co-Al alloy particles (Co: 50 wt.%, Al: 50 wt.%, the average particle size: 30 μm) were used as the particles, the proportion of the particles in the bath was 50 g/l and the cation exchange membrane of Example 2 was used as the cation exchange membrane.

Electrolysis of water was conducted in the same manner as in Comparative Example 1 with use of the Co coated anode thus obtained as the anode, whereby the cell voltage was 1.65 V and after continuous electrolysis for 30 days, no change was observed in the cell voltage.

The oxygen overvoltage at the anode was 0.26 V.

Comparative Example 4

Electrolysis was conducted in the same manner as in Comparative Example 3 except that the cobalt bath in Comparative Example 3 was replaced by a bath composition of $CoCl_2 \cdot 6H_2O$: 300 g/l, $H_3BO_3$: 38 g/l (pH: 2.2, the temperature: 45°C).

As a result, the oxygen overvoltage at the anode was 0.23 V, and the cell voltage was 1.62 V, and after continuous electrolysis for 30 days, no change was observed in the cell voltage.

Comparative Example 5

A silver coated anode was prepared in the same manner as in Comparative Example 1 except that a silver bath (AgCN: 100 g/l, KCN: 100 g/l, $K_2CO_3$: 15 g/l, KOH: 3 g/l) was used as the bath, leached Raney silver particles were dispersed as the particles in the bath in an amount of 100 g/l, the electroplating was conducted at a current density of 6 A/dm², at 50°C for 60 min. and the cation exchange membrane of Example 2 was used as the cation exchange membrane.

Electrolysis of water was conducted in the same manner as in Comparative Example 1 with use of the silver coated anode, whereby the cell voltage was 1.55 V and after continuous electrolysis for 30 days, no change was observed in the cell voltage.

The overvoltage at the anode was 0.16 V.

Example 1

Powdery unleached Raney nickel (Ni: 50 wt.%, Al: 50 wt.%) was dispersed in an amount of 10 g/l into a nickel chloride bath (NiCl$_2$ · 6H$_2$O: 300 g/l, H$_3$BO$_3$: 38 g/l). The dispersion thus obtained and having a pH of 2.2 was supplied to an electroplating tank. The electroplating tank had a perforated plate movable up-and-down at the bottom of the tank, and a bubbler to blow out a gas such as nitrogen was disposed above the perforated plate.

At both side parts of the tank, nickel electrodes (i.e. anodes) having the same surface area were provided, and at the center part of the tank, a plate to be electroplated (i.e. an iron expanded metal) connected to a negative power source was disposed.

Electroplating was carried out while vibrating the perforated plate at an amplitude of 20% of the height of the tank and at a frequency of 100 cycles/min, and blowing nitrogen gas out of the bubbler at a rate of 10 l/min. per 1 dm$^2$ of the bottom surface area of the tank. The electroplating was conducted at 40°C, at a current density of 3 A/dm$^2$ for one hour. The electroplated layer thus obtained had a thickness of about 150 μm and was uniform over the entire surface, and the amount of the Raney nickel particles contained therein was 30 wt.%.

The electrode thus obtained was dipped in an aqueous solution containing 4 g/l of chloroplatinic acid, then dried and reduced in a H$_2$ stream at 300°C to platinum. The amount of the deposition of platinum was about 10 mg/dm$^2$.

The plated plate thus obtained was treated in a 20% NaOH aqueous solution at 80°C for one hour.

A cathode was prepared by conducting electrodeposition of Raney nickel alloy particles in the same manner as in the case of the above anode, followed by the same treatment in an aqueous NaOH solution without depositing the noble metal.

Then, a cation exchange membrane provided on its surface with a porous layer was prepared in the same manner as in Example 1 of Japanese Laid-Open Patent Application No. 75583/81 except that the thickness of the ion exchange membrane was 210 μm.

The above anode was disposed at the anode compartment side of the cation exchange membrane, and the above cathode was disposed at the cathode compartment side, whereby an electrolytic cell for electrolysis of water was assembled.

Electrolysis was conducted at 90°C by supplying a 30% KOH aqueous solution to the anode compartment and water to the cathode compartment while maintaining the KOH concentration in the anode and cathode compartments at a level of 20%.

The cell voltage was 1.55 V, and after continuous electrolysis for 30 days, no change was observed in the cell voltage.

The oxygen overvoltage at the anode was about 0.16 V. Whereas, the oxygen overvoltage of a flat nickel plate was 0.44 V.

Example 2

Powdery unleached Raney nickel (Ni: 50 wt.%, Al: 50 wt.%) was disposed in an amount of 10 g/l into a nickel chloride bath (NiCl$_2$ · 6H$_2$O: 300 g/l, H$_3$BO$_3$: 38 g/l). With use of the dispersion thus obtained and having a pH of 2.0, electroplating was carried out by means of a plating apparatus. The plating apparatus had a reservoir tank for the dispersion and a means for supplying the dispersion from the reservoir tank to the bottom of the plating tank by means of a pump, and at both side parts of the plating tank, nickel electrodes (i.e. anodes) were disposed, and at the center thereof, an iron plate to be electroplated connected to a negative power source was disposed. The dispersion was circulated between the reservoir tank and the plating tank. The electroplating was conducted at a current density of 3 A/dm$^2$ for 30 min. while circulating the dispersion having a pH of 2.0 and a temperature of 40°C at an ascending velocity in the plating tank being 70 cm/sec. The electroplated layer thereby obtained was grayish black and had a uniform thickness of about 70 μm, and the Raney nickel content in the plated layer was about 33 wt.%. This electroplated plate was treated in a 20% NaOH aqueous solution for one hour. An aqueous solution containing 4 g/l of rhodium chloride was sprayed on the electrode thus obtained, then dried, and subjected to reduction in a H$_2$ stream at 400°C to reduce rhodium ion and to deposit the metal. This operation was repeated twice. The amount of the deposited rhodium was 10 mg/dm$^2$.

With use of the anode thus obtained, electrolysis of water was conducted in the same manner as in Example 1.

The cell voltage was 1.56 V, and after continuous electrolysis for 30 days, no change was observed in the cell voltage.

The oxygen overvoltage at the anode was about 0.17 V.

Example 3

A Co coated anode was prepared with use of the same plating apparatus as in Example 1 and in the same manner as in Example 1 except that a cobalt bath (CoSO$_4$ · 7H$_2$O: 330 g/l, H$_3$BO$_3$: 30 g/l, CoCl$_2$ · 6H$_2$O: 30 g/l, 35°C, pH 4.5) was used as the plating bath, and Co-Al alloy particles (Co: 50 wt.%, Al: 50 wt.%, the average particle size: 30 μm) were used as the particles in an amount of 50 g/l in the bath.

Electrolysis of water was carried out in the same manner as in Example 1 with use of the Co coated anode, whereby the cell voltage was 1.60 V and after continuous electrolysis for 30 days, no change was observed in the cell voltage.

The oxygen overvoltage at the anode was about 0.21 V.

Example 4

A silver coated anode was prepared in the same manner as in Example 1 except that a silver bath (AgCN: 100 g/l, KCN: 100 g/l, $K_2CO_3$: 15 g/l, KOH: 3 g/l) was used as the bath, leached Raney silver particles were dispersed as the particles in the bath in an amount of 100 g/l, and the electroplating was conducted at a current density of 6 A/dm$^2$, at 50°C for 60 min.

With use of this anode, electrolysis of water was conducted in the same manner as in Example 1, whereby the cell voltage was 1.53 V, and after continuous electrolysis for 30 days, no change was observed in the cell voltage.

The oxygen overvoltage at the anode was 0.14 V.

Example 5

Electrolysis was conducted in the same manner as in Example 1 except that the aqueous solution containing 4 g/l of chloroplatinic acid was replaced by an aqueous solution containing 2 g/l of chloroplatinic acid. The amount of platinum deposited on the electrode was 5 mg/dm$^2$.

The cell voltage was 1.57 V, and after continuous electrolysis for 30 days, no change was observed in the cell voltage.

The oxygen overvoltage at the anode was 0.18 V.

Example 6

Electrolysis was conducted in the same manner as in Example 2 except that the aqueous solution containing 4 g/l of rhodium chloride was replaced by an aqueous solution containing 2 g/l of rhodium chloride. The amount of rhodium deposited on the electrode was 5 mg/dm$^2$.

The cell voltage was 1.57 V, and after continuous electrolysis for 30 days, no change was observed in the cell voltage.

The oxygen overvoltage at the anode was 0.18 V.

Comparative Example 6

Powdery unleached Raney nickel (Ni: 50 wt.%: Al: 50 wt.%; 200 mesh pass (Kawaken Fine Chemical Co., Ltd.)) was dispersed in an amount of 10 g/l into a nickel chloride bath (NiCl$_2$ · 6H$_2$O: 300 g/l; $H_3BO_3$: 38 g/l). The mixture was thoroughly mixed and a composite coating was carried out in a dispersion on an expanded type iron substrate (5 cm×5 cm) having an undercoated nickel layer having a thickness of 20 μm under a condition of a current density of 3 A/dm$^2$; pH of 2.0 at 40°C for 1 hour by using a pure nickel as the anode. The electrodeposited composite layer had a thickness of 200 μm and the content of the Ni-Al alloy particles in the layer was about 38%.

The porous surface had projections of Raney nickel alloy particles at a rate of $2.5 \times 10^5$/cm$^2$ and the thickness of the composite layer was about 200 μm.

The product was washed with pure water and dried and dipped for about 5 min, into a dispersion obtained by diluting an aqueous dispersion of PTFE (Teflon® 30J: Mitsui Fluorochemical Co.: solid concentration of 60 wt.%: average diameter of 0.3 μ) by 30 times with pure water, after taking it up, water drops remained at the lower edge of the product was removed with a filter paper and the product was dried in a drier and then, heat-treated at 350°C in nitrogen gas atmosphere for about 1 hour. After cooling the product, aluminium component was leached by treating the product in a 20% NaOH aqueous solution at 80°C for 2 hours. An amount of the deposited PTFE particles was 1.7 cc/m$^2$.

The leached Raney nickel co-deposited electrodes were used as an anode and a cathode and a perfluorocarboxylic acid type cation exchange membrane (Flemion® membrane; Asahi Glass Co.) was placed for partitioning them in an electrolytic cell and electrolysis was conducted by supplying a 30% KOH aqueous solution to the anode compartment and water to the cathode compartment while maintaining the KOH concentration in the anode and cathode compartments at a level of 20%. During the electrolysis, $Na_2SiO_3$ was maintained as dissolved in a concentration of about 100 ppm as Si in the anode compartment. After conducting the electrolysis at 90°C at 20 A/dm$^2$ for about 30 days, the oxygen overvoltage was about 0.18 V, which was the same level as the oxygen overvoltage at the initial stage of the operation. The cell voltage was 1.76 V, and after the continuous operation for 30 days, no change was observed in the cell voltage.

Example 7

In the same manner as in Comparative Example 6, an unleached Raney nickel electrode containing about 38% of Ni-Al alloy powder was prepared. The electrode was immediately subjected to leaching treatment at 80°C for 2 hours with use of a 20% sodium hydroxide aqueous solution. In the same manner as in Example 1, 10 mg/dm$^2$ of platinum was deposited thereon. Then, in the same manner as in Comparative Example 6, PTFE dispersion deposition treatment was carried out. The amount of the deposited PTFE particles was 1.9 cc/m$^2$. A cation exchange membrane provided on the surface with a porous layer was prepared in the same manner as in Example 1 of Japanese Laid-Open Patent Application No. 75583/81. With use of this cation exchange membrane and the above electrode, electrolysis was conducted in the same manner as in Comparative Example 6 in the presence of Si ions. The oxygen overvoltage at the initial stage of the electrolysis was 0.14 V, and no substantial change in the oxygen overvoltage was observed after continuous electrolysis for 30 days. The cell voltage was 1.52 V and after the continuous operation for 30 days, no change in the cell voltage was observed.

## Example 8

In the same manner as in Example 2, 10 mg/dm² of rhodium was deposited on the electrocodeposited Raney nickel electrode of Comparative Example 6, and in the same manner as in Comparative Example 6, a leached Raney nickel electrode coated with a polystyrene dispersion was obtained. As the polystyrene dispersion, Polystyrene Uniform Latex (solid concentration of 10%; average diameter of 0.11 μm) (Dow Chemical Co.) diluted by 5 times with water was used. The electrode was prepared by drying at 90°C and no further heating at higher temperature was conducted. An amount of deposited polystyrene was 2 cc/m².

With use of this electrode, electrolysis of water was conducted in the same manner as in Comparative Example 6. However, the temperature of the electrolysis was 70°C. After continuous electrolysis for about 30 days, the oxygen overvoltage was 0.15 V, which was the same level as the oxygen overvoltage at the initial stage of the operation. The cell voltage was 1.53 V, and no change was observed after the continuous operation of 30 days.

## Example 9

A Ni-Al alloy powder-containing electrode was prepared in the same manner as in Comparative Example 6, and then 10 mg/dm² of rhodium was deposited on the electrode in the same manner as in Example 2. The electrode was then dipped in a 2% butyl acetate solution of a tetrafluoroethylene-propyleneglycidyl ether copolymer ("Aflas", molecular weight: about $2.5 \times 10^4$) (Asahi Glass Co.), and then, subjected to heat treatment at 150°C for one hour without using any curing agent. Thereafter, it was subjected to Al leaching treatment in the same manner as in Comparative Example 6. The amount of the deposited copolymer was 1.2 cc/m². With use of this anode, the measurement of the oxygen overvoltage and the electrolysis test were conducted in the same manner as in Example 7.

After continuous electrolysis for about 30 days, the oxygen overvoltage was 0.15 V, which was the same level as the oxygen overvoltage at the initial stage of the operation. The cell voltage was 1.53 V, and no change in the cell voltage was observed after 30 days of the continuous operation.

## Example 10

In the same manner as in Comparative Example 6, a Raney nickel alloy powder-containing electrode was prepared, and in the same manner as in Example 1, 10 mg/dm² of platinum was deposited on the surface of the electrode. The electrode was washed with water and dipped in an aqueous dispersion of tetrafluoroethylene-hexafluoropropylene copolymer (FEP) (Teflon® 120: Mitsui Fluorochemical Co.: solid concentration of 56 wt.%) diluted by 30 times with water for 10 min. and taken-up and the water drops remained at the lower edge removed with a filter paper and the product was dried and backed in an argon atmosphere at 300°C for 1 hour. Then, the aluminum component was leached in the same manner as in Comparative Example 6. An amount of the deposited FEP was 1.9 cc/m².

With use of this electrode, electrolysis was conducted in the same manner as in Example 7. After continuous electrolysis for about 30 days, the oxygen overvoltage was 0.15 V which was the same level as the oxygen overvoltage at the initial stage of the operation. The cell voltage was 1.53 V and no change in the cell voltage was observed after the continuous operation for 30 days.

## Example 11

Powdery unleached Raney nickel (Ni: 50%; Al: 50%; 200 mesh pass) (Kawaken Fine Chemical Co., Ltd.) was dispersed in an amount of 10 g/l into a nickel chloride bath (NiCl · 6H₂O: 300 g/l; H₃BO₃: 38 g/l). The mixture was thoroughly mixed and a composite coating was carried out in a dispersion on an expanded type iron substrate (5 cm×5 cm) having an undercoated nickel layer having a thickness of 20 μm under a condition of a current density of 3 A/dm² at a pH of 2.0 at 40°C for 1 hour, by using a pure nickel as the anode. The composite layer had a thickness of 200 μm and the content of the Ni-Al alloy particles in the plated layer was about 38%.

The porous surface had projections of Raney nickel alloy particles at a rate of $2.5 \times 10^5$/cm² and the thickness of the porous layer was about 200 μm. In the same manner as in Example 6, 5 mg/dm² of rhodium was deposited on this electrode.

The product was washed with pure water and dried and dipped for about 5 min. in an aqueous dispersion of a copolymer of tetrafluoroethylene (83 mol.%) and methylperfluoro-5-oxa-6-heptenoate $(CF_2=CFO(CF_2)_3COOCH_3)$ (17 mol.%) (average diameter of 0.2 μm, solid concentration of 10 wt.%). After taking it up, water drops remained at the lower edge of the product was removed with a filter paper and the product was dried in a drier and then, heat-treated at 200°C in a nitrogen gas atmosphere for about 1 hour. After cooling the product, the aluminum component was leached by treating the product in a 20% NaOH aqueous solution at 80°C for 2 hours. By the treatment about 100% of —COOCH₃ groups were hydrolyzed to —COONa groups. An amount of the deposited cooplymer was 8.5 cc/m².

The leached Raney nickel co-deposited electrodes thus obtained were used as the anode and the cathode, and electrolysis was conducted in the same manner as in Example 7. After continuous electrolysis for about 30 days, the oxygen overvoltage was 0.16 V which was the same level as the oxygen overvoltage at the initial stage of the operation. The cell voltage was 1.54 V and no change in the cell voltage was observed after the continuous operation for 30 days.

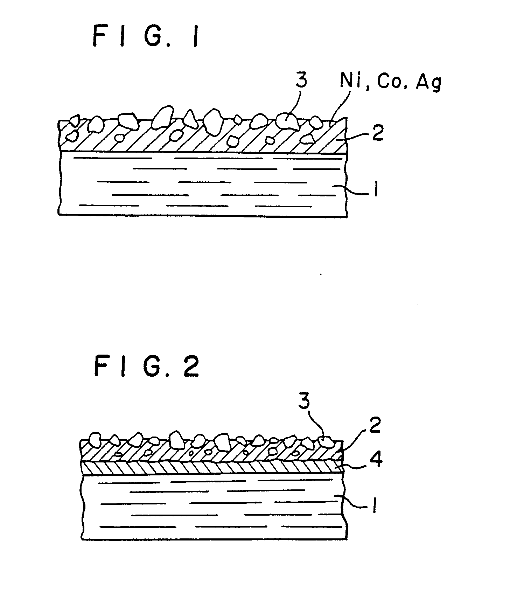

## Claims

1. A method for electrolyzing water in an electrolytic cell provided with an anode and a cathode and cation exchange membrane disposed therebetween, whereby the anode comprises an electrode substrate having a metal layer which is composed of at least one metal selected from nickel, cobalt and silver and which contains partially exposed particles composed essentially of at least one metal selected from nickel, cobalt and silver, characterized in that the surface of said metal layer of said anode carries a coating of a material selected from platinum, rhodium or iridium, their alloys, their oxides or oxide mixtures.

2. A method according to claim 1, characterized in that a fine electron non-conductive material is discontinuously and uniformly deposited over the entire surface of the anode.

3. A method according to claims 1 or 2, characterized in that the cation exchange membrane is provided on at least one side thereof with a gas and liquid permeable non-electrode porous layer having a thickness thinner than the membrane.

## Patentansprüche

1. Verfahren zur Wasserelektrolyse in einer Elektrolysezelle mit einer Anode und einer Kathode und einer dazwischen angeordneten Kationenaustauschermembran, wobei die Anode ein Elektrodensubstrat umfaßt mit einer Metallschicht, welche zusammengesetzt ist aus einem Metall, ausgewählt aus Nickel, Kobalt und Silber, und welches teilweise freiliegende Teilchen enthält, zusammengesetzt im wesentlichen aus mindestens einem Metall, ausgewählt aus Nickel, Kobalt und Silber, dadurch gekennzeichnet, daß die Oberfläche der Metallschicht der Anode eine Beschichtung trägt aus einem Material, ausgewählt aus Platin, Rhodium oder Iridium, deren Legierungen, deren Oxiden der Oxidmischungen.

2. Verfahren gemäß Anspruch 1, dadurch gekennzeichnet, daß auf der gesamten Oberfläche der Anode ein feines, Elektronen nicht-leitfähiges Material diskontinuierlich und einförmig abgeschieden ist.

3. Verfahren gemäß Anspruch 1 oder 2, dadurch gekennzeichnet, daß die Kationenaustauschermembran auf mindestens einer Seite mit einer gas- und flüssigkeitspermeablen, porösen, Nicht-Elektrodenschicht mit einer Dicke, die dünner ist als die Membran, ausgerüstet ist.

## Revendications

1. Procédé pour électrolyser de l'eau dans une cellule électrolytique dotée d'une anode et d'une cathode, ainsi que d'une membrane échangeuse de cations disposée entre celles-ci, où l'anode comprend un support d'électrode présentant une couches métallique qui est composée d'au moins un métal choisi parmi le nickel, le cobalt et l'argent et qui contient des particules partiellement exposées, essentiellement composées d'au moins un métal choisi parmi le nickel, le cobalt et l'argent, caractérisé par le fait que la surface de ladite couche métallique de ladite anode parte un revêtement en une matière choisie parmi le platine, le rhodium et l'iridium, leurs alliages, leurs oxydes ou oxydes mixtes.

2. Procédé selon la revendication 1, caractérisé par le fait qu'une matière fine, non-conductrice d'électrons, est déposée de façon discontinue et uniforme, sur toute la surface de l'anode.

3. Procédé selon les revendications 1 ou 2, caractérisé par le fait que la membrane échangeuse de cations est dotée, au moins sur l'une de ses faces, d'une couche poreuse, non-électrode, perméable aux gaz et aux liquides, présentant une épaisseur inférieure à celle de la membrane.

F I G. I

3  Ni, Co, Ag

2

1

F I G. 2

3

2

4

1